# EUROPEAN PATENT APPLICATION

(11) **EP 3 998 473 A1**
(43) Date of publication of application: **18.05.2022**
(21) Application number: 20835998.4
(22) Date of filing: 29.06.2020
(51) Int. Cl.: G01N 21/85, A61J 3/00, G06T 1/00, H04N 9/07

(54) **IMAGE GENERATION DEVICE, MEDICINE IDENTIFICATION DEVICE, MEDICINE DISPLAY DEVICE, IMAGE GENERATION METHOD, AND PROGRAM**

(30) Priority: 09.07.2019 JP 2019127740
(71) Applicant: FUJIFILM Toyama Chemical Co., Ltd., Chuo-ku Tokyo 104-0031 (JP)
(72) Inventor: IWAMI, Kazuchika, Tokyo 104-0031 (JP)
(74) Representative: Hughes, Andrea Michelle
(86) International application number: PCT/JP2020/025507
(87) International publication number: WO 2021/006093

(57) **Abstract**

To provide an image generation device, a medicine identification device, a medicine display device, an image generation method, and a program, capable of efficiently obtaining an image of a medicine subjected to emphasis processing. The generation device (2) includes: an illuminating unit (10) including light-emitting units simultaneously illuminate a surface of a medicine from irradiation directions different from each other; an imaging unit (12) configured to acquire a plurality of first images of the medicine corresponding to the respective wavelength bands from an imaging element; an image generating unit (16) configured to generate, based on the first images acquired by the imaging unit (12), a second image to which emphasis processing for emphasizing the engraved mark or the print on the surface of the medicine has been applied; and a processing control unit (18) configured to control the image generating unit (16) to generate the second image when two or more of output values of the respective first images are equal to or more than a threshold, and control the image generating unit (16) not to generate the second image when less than two of the output values of the respective first images are equal to or more than the threshold.

## Description

### 1. Field of the Invention

The present invention relates to an image generation device, a medicine identification device, a medicine display device, an image generation method, and a program.

### 2. Description of the Related Art

Conventionally, images of the surfaces of medicines having an engraved mark or a print have been acquired and used.

For example, according to a technique disclosed in Patent Literature 1, images of the surface of a medicine are acquired in the case of inspecting an engraved mark on the surface of the medicine. In the technique disclosed in Patent Literature 1, the medicine is irradiated with light having different wavelengths from two different directions, and images of the medicine corresponding to the respective wavelengths are acquired. Then, shadow portions in the acquired images are synthesized. With use of the synthesized image, the engraved mark on the surface of the medicine is inspected.

For example, according to a technique disclosed in Patent Literature 2, a medicine is irradiated with light from different irradiation directions to acquire a plurality of images of the medicine for each irradiation. In the technique disclosed in Patent Literature 2, edge extraction filters according to the light irradiation directions and the width of an engraved mark are applied to the acquired plurality of images so as to acquire a plurality of edge images. The edge images are then synthesized to identify the medicine.

### Citation List

Patent Literature 1: Japanese Patent Application Laid-Open No. 61-228305
Patent Literature 2: WO 2019/039300

### SUMMARY OF THE INVENTION

In the technique disclosed in Patent Literature 1, an object is irradiated with light having different wavelengths, and the light reflected on the surface of the object is received. However, depending on color of the surface of the object (for example, a medicine), the light may be absorbed on the surface of the object. This may hinder appropriate reception of the reflected light and cause failure in obtaining appropriate images.

In the technique disclosed in Patent Literature 2, it is necessary to acquire a plurality of images by performing irradiation in each irradiation direction, which may hinder efficient image acquisition.

The present invention has been made in view of such circumstances, and aims to provide an image generation device, a medicine identification device, a medicine display device, an image generation method, and a program, capable of efficiently obtaining images of a medicine, with emphasis processing efficiently performed.

In order to accomplish the above object, an image generation device according to one aspect of the present invention includes: a stage configured to place thereon a medicine whose surface has an engraved mark or a print; an illuminating unit including a plurality of light-emitting units that respectively emit light of a plurality of wavelength bands that are different from each other, the light-emitting units simultaneously illuminating the surface of the medicine from irradiation directions different from each other; an imaging unit including an imaging element provided with an array of filters having spectral sensitivity characteristics corresponding to the wavelength bands that the respective light-emitting units have, the imaging unit configured to acquire a plurality of first images of the medicine corresponding to the respective wavelength bands from the imaging element; an image generating unit configured to generate, based on the plurality of first images acquired by the imaging unit, a second image to which emphasis processing for emphasizing the engraved mark or the print on the surface of the medicine has been applied; and a processing control unit configured to control the image generating unit to generate the second image in a case where two or more of output values of the respective first images are equal to or more than a threshold, and control the image generating unit not to generate the second image in a case where less than two of the output values of the respective first images are equal to or more than the threshold.

According to the aspect, the surface of the medicine is simultaneously illuminated with light of a plurality of wavelength bands different from each other from irradiation directions different from each other, and first images of the medicine corresponding to the respective wavelength bands are simultaneously acquired. According to the aspect, output values of the respective first images are determined before generation of the second image, and in a case where it is determined that two or more of the output values of the respective first images are equal to or more than a threshold, the second image is generated. Therefore, in the present aspect, it is possible to acquire the image of the medicine to which emphasis processing is efficiently applied.

Preferably, the illuminating unit has three or more light-emitting units, and the processing control unit causes the image generating unit to generate the second image in a case where three or more of the output values of the respective first images are equal to or more than the threshold, and causes the image generating unit not to generate the second image in a case where less than three of the output values of the respective first images are equal to or more than the threshold.

Preferably, the illuminating unit includes three light-emitting units that emit light of three wavelength bands constituting three primary colors.

Preferably, the illuminating unit includes a first light-emitting unit, a second light-emitting unit, and a third light-emitting unit, and the irradiation directions of the first light-emitting unit and the second light-emitting unit intersect on the medicine at 120°, and the irradiation directions of the first light-emitting unit and the third light-emitting unit intersect on the medicine at 120°.

Preferably, the illuminating unit includes a first light-emitting unit, a second light-emitting unit, and a third light-emitting unit, and the first light-emitting unit, the second light-emitting unit, and the third light-emitting unit are arranged so as to form a circular hole shape.

Preferably, the illuminating unit includes a first light-emitting unit, a second light-emitting unit, a third light-emitting unit, and a fourth light-emitting unit, and the irradiation directions of the first light-emitting unit and the second light-emitting unit perpendicularly intersect on the medicine, the irradiation directions of the first light-emitting unit and the fourth light-emitting unit perpendicularly intersect on the medicine, the irradiation directions of the second light-emitting unit and the third light-emitting unit perpendicularly intersect on the medicine.

Preferably, the processing control unit uses a sum, an average or a median of pixel values in each of the first images as the output value.

Preferably, the image generating unit acquires a plurality of edge images using edge extraction filters according to the irradiation directions, and generates the second image using the plurality of edge images.

A medicine identification device according to another aspect of the present invention, identifies the medicine based on the second image generated by the image generation device.

A medicine display device according to another aspect of the present invention, displays the second image generated by the image generation device, on a display unit.

An image generation method according to still another aspect of the present invention includes: a step of simultaneously illuminating, by a plurality of light-emitting units configured to emit light of a plurality of wavelengths that are different from each other, a surface of a medicine from irradiation directions different from each other, the medicine being placed on a stage and having an engraved mark or a print on the surface; a step of acquiring, from an imaging element provided with an array of filters having spectral sensitivity characteristics corresponding to the wavelength bands of the light-emitting units, a plurality of first images of the medicine corresponding to the respective wavelength bands; a step of generating, based on the plurality of first images, a second image to which emphasis processing for emphasizing the engraved mark or the print on the surface of the medicine has been applied; and a step of performing control to generate the second image in a case where two or more of output values of the respective first images are equal to or more than a threshold, and not to generate the second image in a case where less than two of the output values of the respective first images are equal to or more than the threshold.

A program according to still another aspect of the present invention causes a computer to execute an image generation process, the process including: a step of simultaneously illuminating, by a plurality of light-emitting units configured to emit light of a plurality of wavelengths that are different from each other, a surface of a medicine from irradiation directions different from each other, the medicine being placed on a stage and having an engraved mark or a print on the surface; a step of acquiring, from an imaging element provided with an array of filters having spectral sensitivity characteristics corresponding to the wavelength bands of the light-emitting units, a plurality of first images of the medicine corresponding to the respective wavelength bands; a step of generating, based on the plurality of first images, a second image to which emphasis processing for emphasizing the engraved mark or the print on the surface of the medicine has been applied; and a step of performing control to generate the second image in a case where two or more of output values of the respective first images are equal to or more than a threshold, and not to generate the second image in a case where less than two of the output values of the respective first images are equal to or more than the threshold.

According to the present invention, the surface of the medicine is simultaneously illuminated with light of a plurality of wavelength bands different from each other from irradiation directions different from each other, and first images of the medicine corresponding to the respective wavelength bands are simultaneously acquired. According to the present invention, the output values of the respective first images are determined before generation of the second image, and in a case where two or more of the output values of the respective first images are equal to or more than a threshold, the second image is generated. Therefore, in the present invention, it is possible to acquire the image of the medicine to which emphasis processing is efficiently applied.

### BRIEF DESCRIPTION OF THE DRAWINGS

Figure 1 is a block diagram showing a configuration of an image generation device.
Figure 2 is a view schematically showing arrangement of light-emitting units.
Figure 3 is a view explaining spectral sensitivity characteristics of color filters.
Figure 4 is a view explaining reflection of light of respective wavelength bands.
Figure 5 is a view explaining reflection of light of respective wavelength bands.
Figure 6 is a view explaining reflection of light of respective wavelength bands.
Figure 7 is a view showing first images.
Figure 8 is a functional block diagram of an image generating unit.
Figure 9 is a schematic view of cross sectional structure of a medicine.
Figure 10 is a view showing examples of Sobel filters.
Figure 11 is a functional block diagram of a medicine identifying unit.
Figure 12 is a flowchart describing an image generation method.
Figure 13 is a view explaining spectral sensitivity characteristics of the color filters.
Figure 14 is a conceptual view of the light-emitting unit.
Figure 15 is a conceptual view of the light-emitting unit.
Figure 16 is a view showing another example of the arrangement of the light-emitting units.
Figure 17 is a view schematically showing the arrangement of the light-emitting units.

### DESCRIPTION OF THE PREFERRED EMBODIMENTS

Hereinafter, preferable embodiments of an image generation device, a medicine identification device, a medicine display device, an image generation method, and a program according to the present invention are described with reference to the appended drawings.

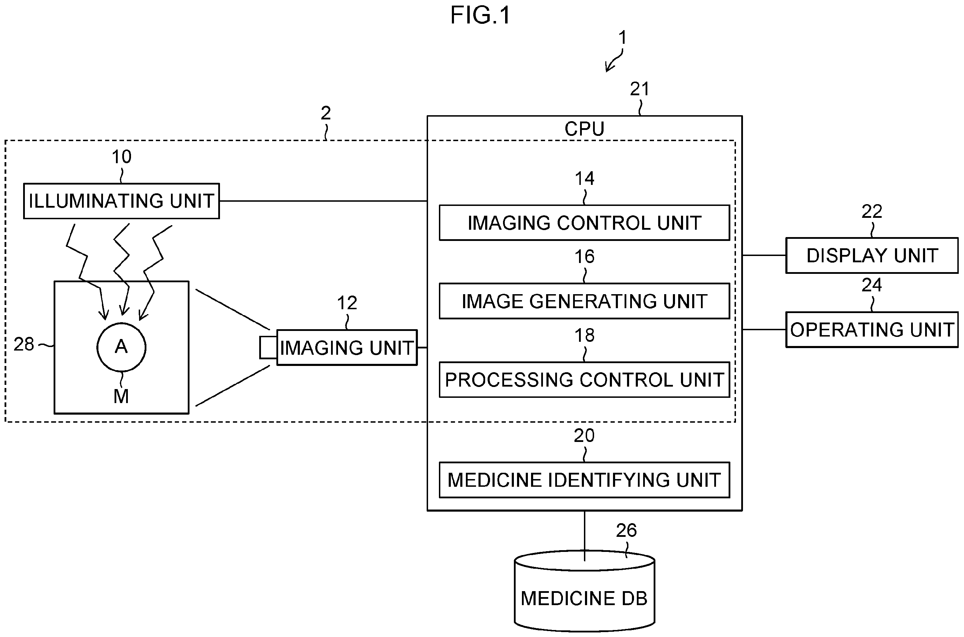

Figure 1 is a block diagram showing a configuration of a medicine identification device 1 in the present invention. The medicine identification device 1 is equipped with an image generation device 2. The image generation device 2 includes a stage 28, an illuminating unit 10, an imaging unit 12, and a CPU 21 (an imaging control unit 14, an image generating unit 16, and a processing control unit 18). In addition, the medicine identification device 1 includes a medicine identifying unit 20, a medicine database (medicine DB) 26, a display unit 22, and an operating unit 24. The medicine identification device 1 identifies a medicine M using images of the medicine M generated by the image generation device 2. The medicine identification device 1 also functions as a medicine display device that displays the images of the medicine M generated by the image generation device 2 on the display unit 22.

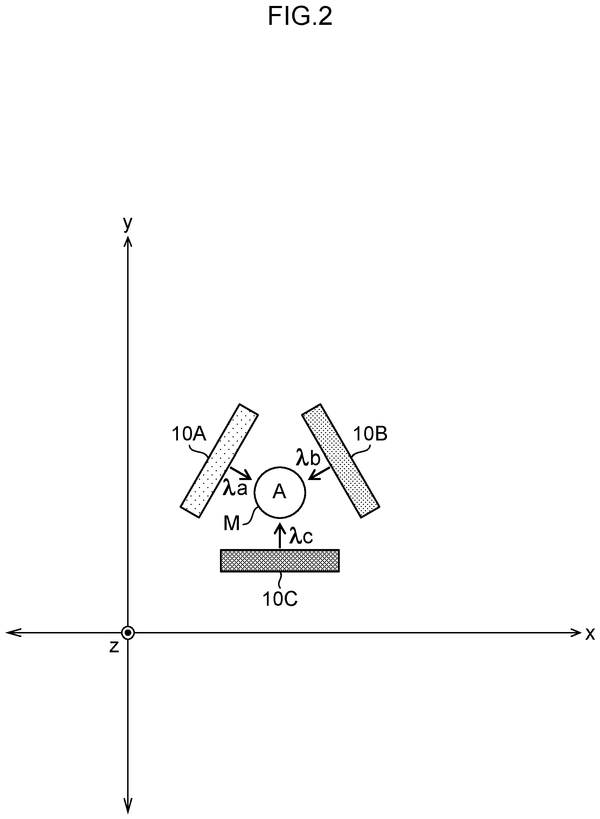

The illuminating unit 10 illuminates a surface of the medicine M placed on the stage 28. The illuminating unit 10 includes a plurality of light-emitting units that emit light of a plurality of (two or more) wavelength bands that are different from each other. The light-emitting units simultaneously illuminate the surface of the medicine from respective different irradiation directions. In an example shown below, the illuminating unit 10 includes three light-emitting units that emit light of three wavelength bands constituting three primary colors (see Figure 2). For example, the three light-emitting units emit light of three primary colors: red (R), green (G); and blue (B). Alternatively, the three light-emitting units may emit light of cyan (C), magenta (M) and yellow (Y). The light from the light-emitting units is only required to have wavelength bands different from each other, the colors of the light are not limited to the three primary colors, and various combinations of colors can be adopted.

The imaging unit 12 acquires first images (taken images) of the medicine M. The imaging unit 12 simultaneously acquires three first images corresponding to the three wavelength bands constituting the three primary colors. The imaging unit 12 includes an imaging element (not shown) provided with an array of color filters (or filters) having spectral sensitivity characteristics corresponding to the wavelength bands of the respective light-emitting units in the illuminating unit 10. For example, when the light-emitting units have the wavelength bands of red (R), green (G) and blue (B), the color filters have spectral sensitivity characteristics in red (R), green (G) and blue (B), respectively. As the color filters, filters having respective spectral sensitivity characteristics are arrayed in a Beyer array, for example.

The CPU 21 includes the imaging control unit 14, the image generating unit 16, the processing control unit 18, and the medicine identifying unit 20. The CPU 21 is a part of a computer. When the central processing unit (CPU) 21 executes programs stored in a memory mounted on the computer, various functions (processing units) are implemented.

The imaging control unit 14 controls the illuminating unit 10 and the imaging unit 12 to acquire the first images. Specifically, while the medicine M is illuminated by the illuminating unit 10, the imaging control unit 14 causes the imaging unit 12 to simultaneously acquire three first images of the surface of the medicine M (three images corresponding to the wavelength bands of red (R), green (G) and blue (B)).

The image generating unit 16 generates a second image based on the first images. The image generating unit 16 acquires three first images, and generates the second image subjected to emphasis processing to emphasize the engraved mark or the print attached to the surface.

The medicine identifying unit 20 identifies the medicine based on the second image generated by the image generating unit 16. Specifically, the medicine identifying unit 20 collates (compare) the second image with images of registered medicines which are registered in the medicine DB 26 so as to identify the medicine as any one of the plurality of registered medicines registered in the medicine DB 26. Here, in the case where, for example, the medicine identification device 1 discriminates medicines, all the medicines may be stored as the registered medicines in the medicine DB 26. In the case where the medicine identification device 1 audits medicines in one-dose packages, prescribed medicines based on prescriptions may be stored as the registered medicines in the medicine DB 26. Note that in the medicine DB 26, images of medicines (medicine images on the front side and the back side of medicines) are registered in association with medicine identification information such as the names of the medicines.

The processing control unit 18 controls operation of the image generating unit 16, depending on the output values of the first images acquired in the imaging unit 12. Specifically, the processing control unit 18 causes the image generating unit 16 to generate the second image when two or more of output values of the respective first images are equal to or more than a threshold. On the other hand, when less than two of the output values of the respective first images are equal to or more than the threshold, the processing control unit 18 controls the image generating unit 16 not to generate the second image.

Depending on the color of the surface of the medicine M, light of a specific wavelength band from the light-emitting unit may be absorbed. When the light is absorbed, the output value of the first image corresponding to the light of the specific wavelength band is reduced. For example, when the light of a specific wavelength band is absorbed into the surface of the medicine, the output value of the first image may become 0 (zero). When a sufficient output value of the first image cannot be obtained, it is difficult to appropriately perform the emphasis processing on the first image in order to emphasize the engraved mark or the print attached to the surface. When such a first image is included in the first images used to generate the second image, the engraved mark or the print is not appropriately emphasized in the second image. Therefore, the processing control unit 18 determines whether the output values of the first images are equal to or more than the threshold, and when the first images are equal to or more than the output values, the processing control unit 18 operates the image generating unit 16.

On the surface of the medicine M, an engraved mark or a print in various forms is provided. Therefore, it is desirable to illuminate the medicine M with light from as many directions as possible so as to illuminate the engraved mark or the print from all directions. Here, under the control of the processing control unit 18, the image generating unit 16 generates the second image based on the first images obtained by illumination from at least two different directions, preferably generates the second image based on the first images obtained by illumination from three different directions, and more favorably generates the second image based on the first images obtained by illumination from four different directions.

Note that the processing control unit 18 uses a sum, an average or a median of pixel values in each of the first images as the output value for comparison with the threshold. The threshold is determined from the viewpoint of whether the imaging unit 12 properly receives light of a given wavelength band.

The display unit 22 includes a monitor. The display unit 22 displays the first images, the second image, and an identification result R of the medicine identifying unit 20.

The operating unit 24 receives an input from a user. For example, the operating unit 24 includes a mouse or a keyboard.

### <Acquisition of First Images>

First, acquisition of the first images is described in detail.

Figure 2 is a view schematically showing the arrangement of three light-emitting units constituting the illuminating unit 10. Here, the stage 28 for placing the medicine M thereon is omitted.

In the case shown in Figure 2, the illuminating unit 10 includes a first light-emitting unit 10A, a second light-emitting unit 10B, and a third light-emitting unit 10C. The first light-emitting unit 10A emits light having a wavelength band λa, the second light-emitting unit 10B emits light having a wavelength band λb, and the third light-emitting unit 10C emits light having a wavelength band λc. Here, the wavelength band λa is a wavelength band of blue (B) light, the wavelength band λb is a wavelength band of green (G) light, and the wavelength band λc is a wavelength band of red (R) light. Note that the first light-emitting unit 10A, the second light-emitting unit 10B, and the third light-emitting unit 10C respectively include, for example, LED light sources. Each of the LED light sources is a line light source including arranged LED point light sources.

The first light-emitting unit 10A, the second light-emitting unit 10B, and the third light-emitting unit 10C are arranged around the medicine M such that irradiation directions of the first light-emitting unit 10A and the second light-emitting unit 10B intersect on the medicine M at 120°, and the irradiation directions of the first light-emitting unit 10A and the third light-emitting unit 10C intersect on the medicine M at 120°. In other words, in X-Y coordinates in Figure 2, the irradiation direction of the first light-emitting unit 10A is expressed by a direction vector V1 (1, -1), and the irradiation direction of the second light-emitting unit 10B is expressed by a direction vector V2 (-1, -1), and the irradiation direction of the third light-emitting unit 10C is expressed by a direction vector V3 (0, 1).

By arranging the first light-emitting unit 10A, the second light-emitting unit 10B, and the third light-emitting unit 10C in this way, it becomes possible to illuminate the medicine M from directions at even intervals, and emphasis processing of the engraved mark or the print on the medicine M can be performed more efficiently.

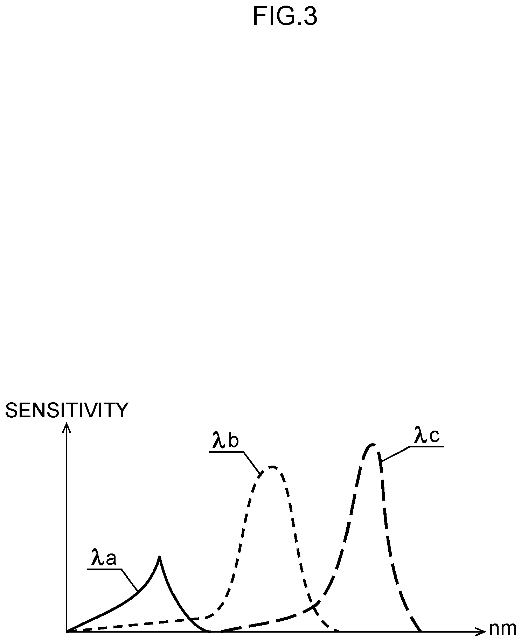

Figure 3 is a view explaining spectral sensitivity characteristics of color filters provided in the imaging element of the imaging unit 12. The color filters have spectral sensitivity to the wavelength band λa (blue (B)), the wavelength band λb (green (G)), and the wavelength band λc (R) as shown in the Figure 3. Accordingly, the filters of the imaging element can receive light of the wavelength band λa (blue (B)), light of the wavelength band λb (green (G)), and light of the wavelength band λc (red (R)). As a result, the first images corresponding to the respective light can be acquired simultaneously. Note that the imaging unit 12 receives the light of the wavelength band λa (blue (B)), the light of the wavelength band λb (green (G)) and the light of the wavelength band λc (red (R)), and performs publicly known image processing including demosaic processing to output the first images corresponding to the respective light.

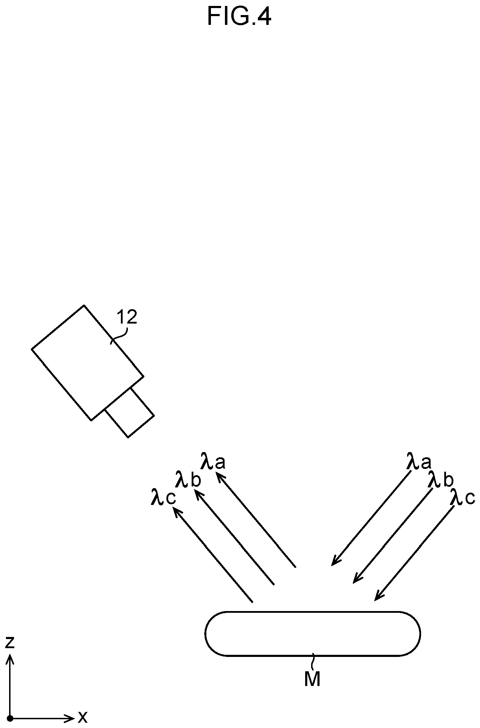

Figures 4 to 6 are views explaining reflection of the light of the wavelength band λa, the light of the wavelength band λb and the light of the wavelength band λc on the surface of the medicine M. Note that in Figures 4 to 6, the medicine M is irradiated with the light of the wavelength band λa, the light of the wavelength band λb, and the light of the wavelength band λc from different directions as shown in Figure 2.

Figure 4 shows the case where, for example, a color of the medicine M is white, and the light of the wavelength band λa, the light of the wavelength band λb, and the light of the wavelength band λc are reflected off the medicine M. When the light of the wavelength band λa, the light of the wavelength band λb, and the light of the wavelength band λc are reflected, the output values of the first images for the respective wavelength bands are equal to or more than the threshold. Since the respective output values of the three first images are equal to or more than the threshold, the processing control unit 18 causes execution of subsequent processing, i.e., generation of the second image by the image generating unit 16.

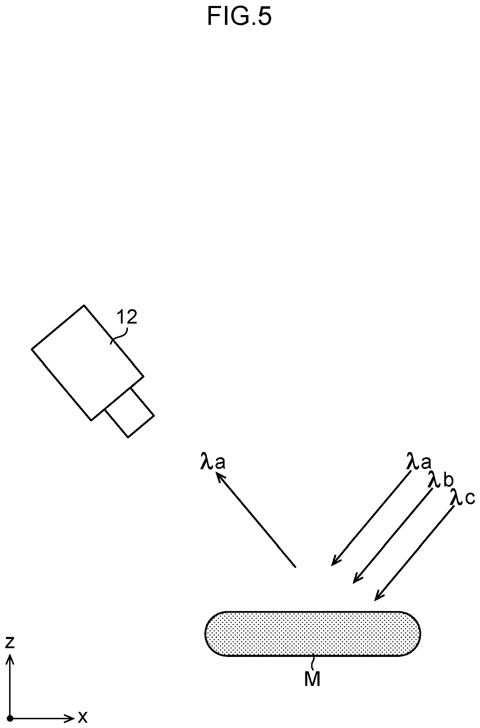

Figure 5 shows the case where, for example, the medicine M has a specific color other than white, and only the light of the wavelength band λa, out of the light of the wavelength band λa, the light of the wavelength band λb, and the light of the wavelength band λc, is reflected. Thus, when only the light of the wavelength band λa is reflected, the output value of one first image is equal to or more than the threshold, but the output values of two first images are less than the threshold. Therefore, in such a case, only the first image corresponding to the wavelength band λa can properly be acquired, and therefore generation of the second image by the image generating unit 16 is not performed.

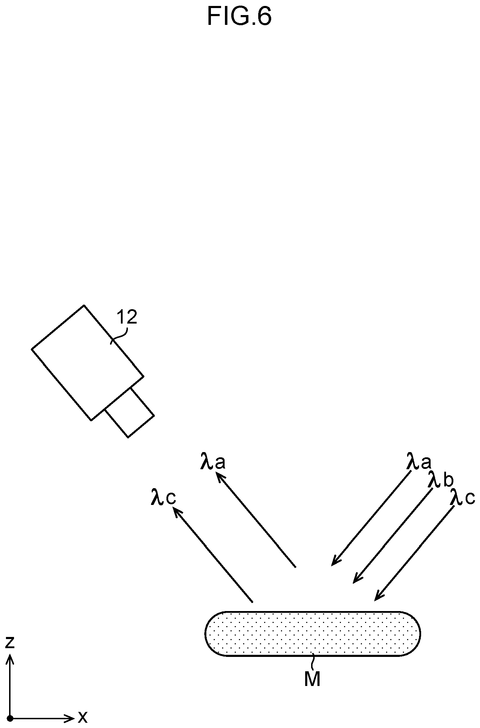

Figure 6 shows the case where the medicine M has a specific color other than white, and the light of the wavelength band λa and the light of the wavelength band λc, out of the light of the wavelength band λa, the light of the wavelength band λb, and the light of the wavelength band λc, are reflected. Thus, when the light of the wavelength band λa and the light of the wavelength band λc are reflected, the output values of two first images are equal to or more than the threshold, and the output value of one first image is less than the threshold. Therefore, in such a case, since the first image corresponding to the wavelength band λa and the first image corresponding to the wavelength band λc can properly be acquired, the subsequent processing, i.e., generation of the second image by the image generating unit 16 is executed. Here, in this case, the image generating unit 16 generates the second image based on the first image of the wavelength band λa and the first image of the wavelength band λc which can properly be acquired.

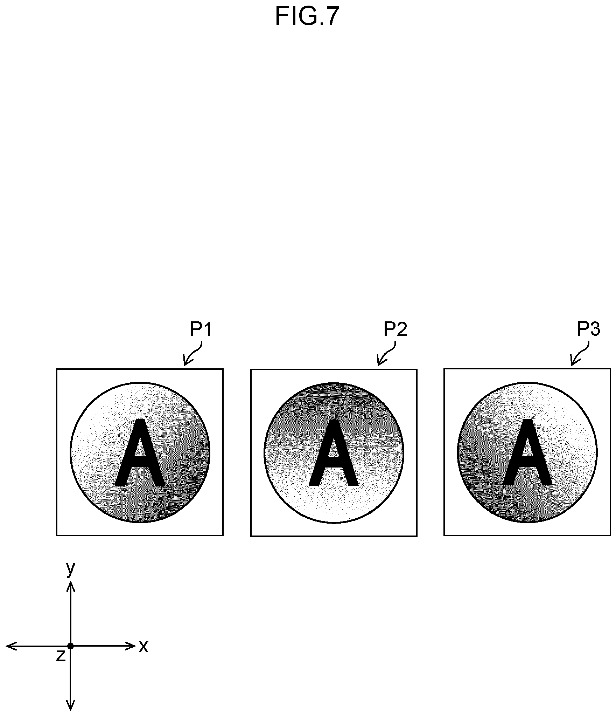

Figure 7 is a view showing three first images acquired by the imaging unit 12. Note that the three first images shown in Figure 7 correspond to the case described in Figure 4, i.e., the case where the output values of the three first images are equal to or more than the threshold.

A first image P1 corresponds to the wavelength band λa, a first image P2 corresponds to the wavelength band λb, and a first image P3 corresponds to the wavelength band λc. The first images P1 to P3 have luminance unevenness due to respective irradiation directions. A character "A" on each image shown in Figure 7 represents an engraved mark on the surface of the medicine M. The engraved mark A in the first images P1 to P3 is a ruggedness (convexo-concave shape) on the surface of the medicine, and a shadow of the engraved mark A appears differently depending on the irradiation direction of illuminating light.

### <Generation of Second Image>

Next, description about generation of the second image is provided. The second image is generated by the image generating unit 16.

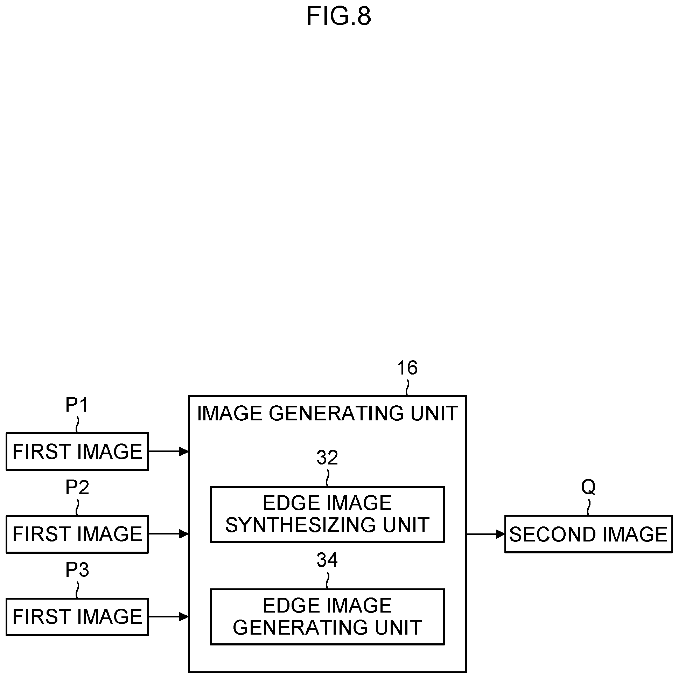

Figure 8 is a functional block diagram of the image generating unit 16. The image generating unit 16 includes an edge image synthesizing unit 32 and an edge image generating unit 34.

The edge image generating unit 34 generates three edge images from the first images (PI to P3) by using edge extraction filters (for example, Sobel filters) for the directions corresponding to the irradiation directions of the respective illumination light. Hereinafter, generation of the edge images is described. In the following description, a medicine T with a scoring line S in the center of the surface is used to simplify the description.

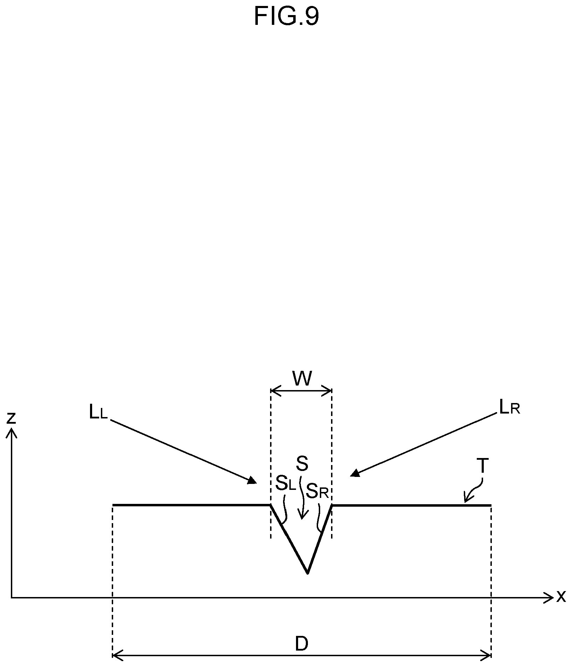

Figure 9 is a schematic view of a cross-sectional structure of the medicine T taken along an x-z plane extending through the center of medicine T. Figure 9 shows a profile of a line corresponding to one pixel.

The medicine T has a diameter D, and the surface has a scoring line S formed of a V-shaped groove in cross section. The groove of the scoring line S has a width W. The width of the groove of the scoring line S is a distance from one end to the other end of the groove in the direction perpendicular to the extension direction of the groove, and is a distance on the surface of the medicine T.

Here, when the surface of the medicine T is illuminated with a plurality of illuminations different in irradiation direction, the shadow of the scoring line S appears differently.

In other words, when the medicine T is illuminated with illuminating light L_{L}, a face S_{R} on the right side of the scoring line S is illuminated with the illuminating light L_{L}. However, a face S_{L} on the left side of the scoring line S is not illuminated with the illuminating light L_{L}, and a shadow is generated on the face S_{L} on the left side of the scoring line S. Similarly, when the medicine T is illuminated with illuminating light L_{R} in the opposite direction of the illuminating light L_{L}, the face S_{L} on the left side of the scoring line S is illuminated with illuminating light L_{R}. However, the face S_{R} on the right side of the scoring line S is not illuminated with the illuminating light L_{R}, and a shadow is generated on the face S_{R} on the right side of the scoring line S.

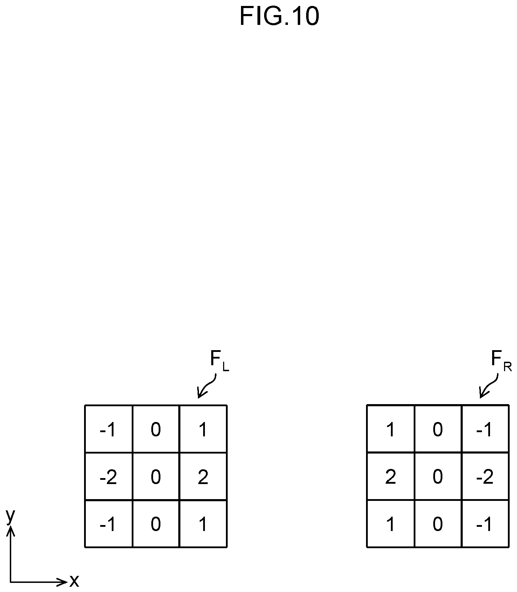

Figure 10 is a view showing examples of the Sobel filters used for edge extraction in the edge image generating unit 34.

A Sobel filter F_{L} is used in the case of edge extraction from an image G_{L} of the medicine T that is irradiated with the illuminating light L_{L} from the left direction. A Sobel filter F_{R} is used in the case of edge extraction from an image G_{R} of the medicine T irradiated with the illuminating light L_{R} from the right direction.

The Sobel filters F_{L} and F_{R} shown in Figure 10 have a kernel size of three pixels in an x-axis direction and three pixels in a y-axis direction in this example. However, without being limited to this size, the kernel size is preferably variable depending on a resolution of the imaging unit 12. Moreover, it is preferable to use, as the Sobel filters F_{L} and F_{R}, Sobel filters having a kernel size larger than half (the number of pixels corresponding to) the width W of the scoring line S. For example, when the number of pixels corresponding to the width of the groove of the scoring line S is four pixels, the Sobel filter to be used has a size larger than two pixels that is half the four pixels. By using the edge extraction filter having a size in consideration of the number of pixels corresponding to the width of the groove of the scoring line S, it is possible to accurately extract the groove and also reduce information other than the engraved mark, such as patterns and scratches on the surface that are smaller than the width of the groove. Note that the filter size and a method for deriving filter factors for the Sobel filter are found in http://sssiii.seesaa.net/article/368842002.html.

The edge image generating unit 34 generates edge images corresponding to the first images P1 to P3 using the Sobel filters according to the irradiation directions for irradiating the medicine M by the first light-emitting unit 10A, the second light-emitting unit 10B, and the third light-emitting unit 10C, as described above. By using the Sobel filters according to the illumination directions in this way, it is possible to obtain edge images subjected to appropriate edge extraction.

Furthermore, the filters used for edge extraction filtering in the edge image generating unit 34 are not limited to the Sobel filters, and filters such as Laplacian filters and Canny filters may also be used.

The edge image generating unit 34 outputs three edge images, generated for the three first images P1 to P3, to the edge image synthesizing unit 32.

Other inputs into the edge image synthesizing unit 32 include the first images P1 to P3 which are added separately. For example, the edge image synthesizing unit 32 selects one image out of the first images P1 to P3, detects luminance unevenness in the one selected image, and applies luminance unevenness correction processing to correct the luminance unevenness in the selected image based on the detected luminance unevenness to thereby generate an image with reduced luminance unevenness. The edge image synthesizing unit 32 then synthesizes the image with reduced luminance unevenness, with the three edge images generated by the edge image synthesizing unit 32.

As a result, the image generating unit 16 can generate an image (second image) Q which is obtained by applying emphasis processing for emphasizing the engraved mark or the print, to the image of the medicine with reduced luminance unevenness due to the illuminating light.

As described above, in the image generation device 2, the first images P1 to P3 of the medicine M corresponding to respective wavelength bands are simultaneously acquired. The output values of the first images P1 to P3 are determined before generation of the second image Q, and when two or more of the output values of the respective first images are equal to or more than the threshold, the second image Q is generated. Therefore, the image generation device 2 can efficiently obtain the image of the medicine to which emphasis processing has been applied.

### <Identification of Medicine>

Next, identification of the medicine is described. The medicine identification device 1 identifies whether the medicine M is any one of the medicines registered in the medicine DB 26 by using the second image Q generated by the image generation device 2.

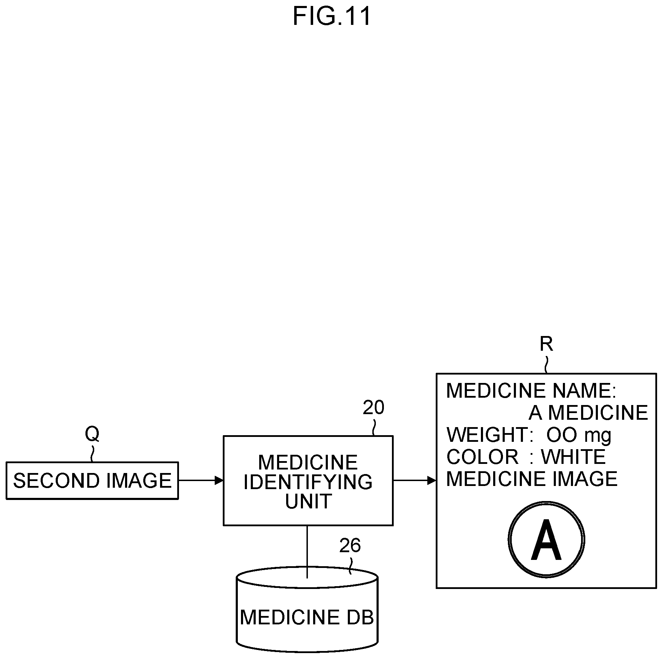

Figure 11 is a view for describing the medicine identifying unit 20 of the medicine identification device 1.

The medicine identifying unit 20 collates the registered medicines stored in the medicine DB 26 with the second image to identify the medicine M. For example, the medicine identifying unit 20 uses template matching to perform matching (collate) the engraved mark or the print in the second image with those in the images of the registered medicines to identify the medicine M. The medicine identifying unit 20 then outputs an identification result R. The medicine identifying unit 20 outputs, for example, medicine name "A medicine", weight "BB mg", color "white", and medicine image as the identification result R.

Since the engraved mark or the print has been emphasized in the second image Q, the medicine identifying unit 20 can correctly collate the images of registered medicines registered in the medicine DB 26 with the second image Q.

### <Image Generation Method>

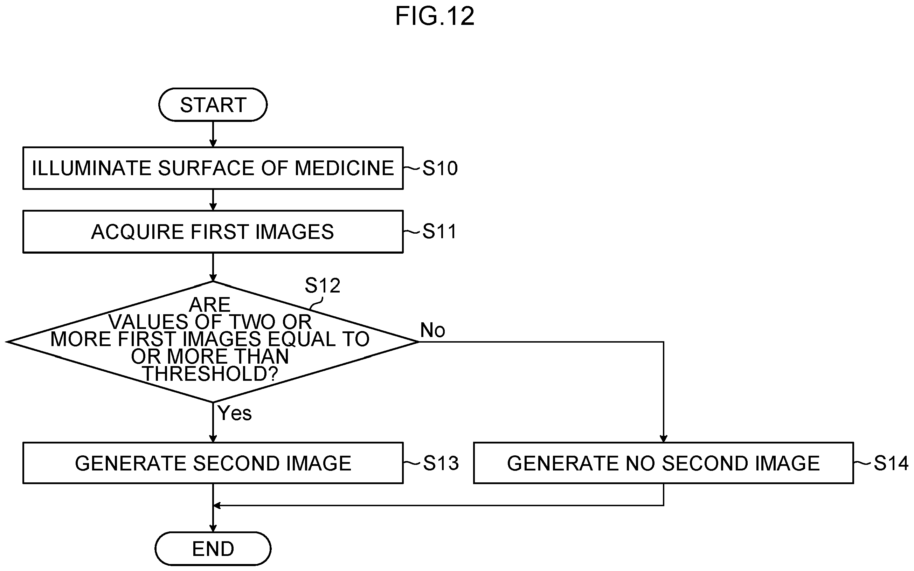

Next, an image generation method (image generation process) executed by using the image generation device 2 is described. Figure 12 is a flowchart describing the image generation method.

First, the surface of the medicine M placed on the stage 28 is illuminated by the first light-emitting unit 10A, the second light-emitting unit 10B, and the third light-emitting unit 10C, which constitute the illuminating unit 10 (step S10). Then, the imaging unit 12 acquires first images corresponding to the wavelength band λa, the wavelength band λb, and the wavelength band λc (step S11). Next, the processing control unit 18 compares the output values of the acquired first images with the threshold, and determines whether to generate a second image or not (step S12). Specifically, in a case where the output value of less than two first images is equal to or more than the threshold, the processing control unit 18 does not cause generation of the second image that is subsequent processing (step S14), and ends generation of the medicine image. On the other hand, in a case where the output values of two or more first images are equal to or more than the threshold, the processing control unit 18 causes generation of the second image in the subsequent processing (step S13). Specifically, the processing control unit 18 causes the image generating unit 16 to generate the second image to which emphasis processing of the print or the engraved mark has been applied, based on the three first images.

In the embodiment, hardware structures of the processing units (processing unit) that execute various processing (for example, the imaging control unit 14, the image generating unit 16, the processing control unit 18, and the medicine identifying unit 20) may be various processors as shown below. The various processors include a central processing unit (CPU) that is a general-purpose processor that executes software (programs) and functions as various processing units, a programmable logic device (PLD), which is a processor capable of changing circuit configuration after manufacturing, such as a field programmable gate array (FPGA), and an exclusive electrical circuit that is a processor having a circuit configuration exclusively designed for execution of specific processes, such as application specific integrated circuit (ASIC).

One processing unit may be constituted of one of the various processors, or may be constituted of two or more processors of the same kind or different kinds (for example, a combination of a plurality of FPGAs, or a combination of a CPU and an FPGA). One processor may constitute a plurality of processing units. As an example of one processor constituting a plurality of processing units, firstly, there is a configuration, as represented by a computer such as a client or a server, where a combination of one or more CPUs and software constitutes one processor, so that the one processor functions as a plurality of processing units. Secondary, there is a configuration using a processor which implements the function of the entire system including a plurality of processing units with a single integrated circuit (IC) chip, as represented by a system on chip (SoC) or the like. In this way, the various processing units are configured with one or more of the various processors in terms of the hardware structure.

Furthermore, more specifically, the hardware structures of the various kinds of processors correspond to electrical circuits (circuitry) formed by combining circuit elements such as semiconductor elements.

Each of the above configurations and functions may be implemented as appropriate with any kind of hardware, any kind of software, or by a combination thereof. For example, the present invention is also applicable to a program causing a computer to execute the above processing steps (processing procedures), a computer-readable recording medium storing such a program (non-transitory recording medium) thereon, or a computer on which such a program can be installed.

### <Others>

### <<About light-emitting unit>>

The light-emitting units constituting the illuminating unit 10 can set the wavelength band depending on the spectral sensitivity characteristics of the filters provided in the imaging unit 12.

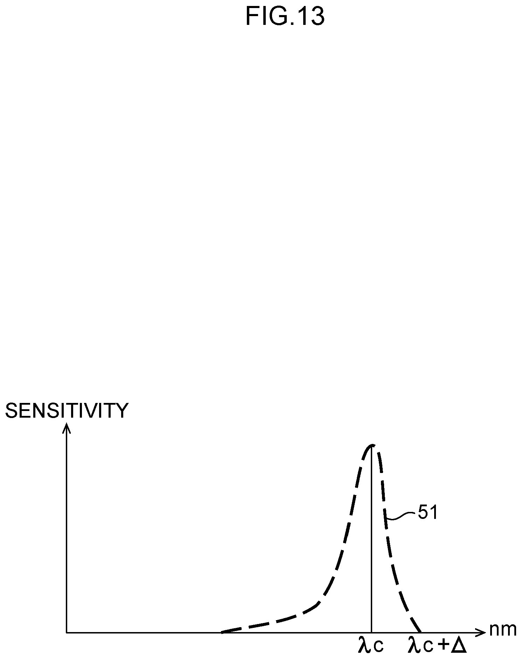

Figure 13 is a view explaining an example of spectral sensitivity characteristics of a filters provided in the imaging element.

When the color filters having the spectral sensitivity characteristics expressed by a curve 51 in Figure 13 are provided, the light-emitting unit can be formed using, for example, light emitting diodes (LEDs) having a dominant wavelength of λx and a dominant wavelength λx + Δ, as a light source.

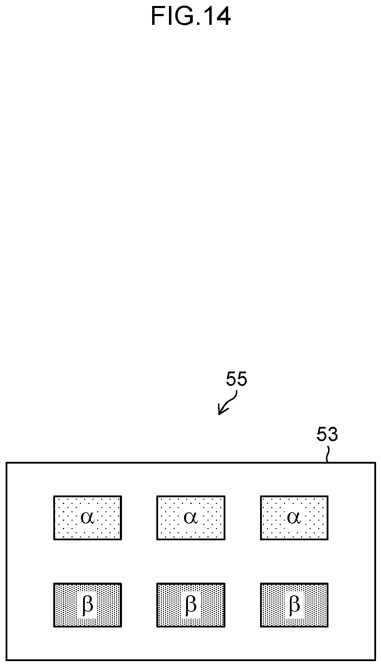

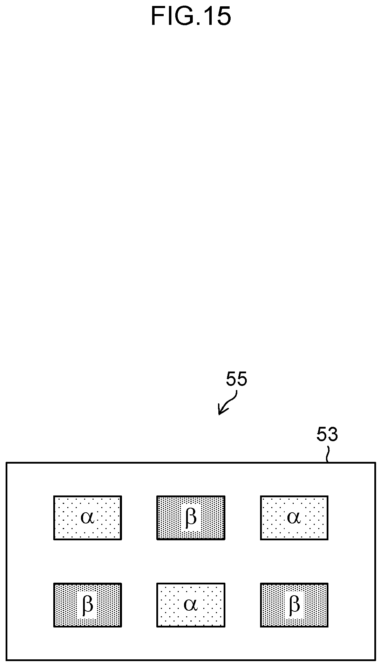

Figures 14 and 15 are conceptual views of the light-emitting unit. In Figures 14 and 15, the light-emitting unit 55 is formed by regularly arraying on a substrate 53, LED point light sources α having the dominant wavelength λx and LED point light sources β having the dominant wavelength λx + Δ. In the light-emitting unit 55 shown in Figure 14, the LED point light sources α and the LED point light sources β are each arranged laterally in a row on the substrate 53. In addition, the LED point light sources α and the LED point light sources β are arranged to be above and below in a longitudinal direction. In the light-emitting unit 55 shown in Figure 15, the LED point light sources α and the LED point light sources β are alternately arranged in a lateral direction in a row on the substrate 53. The LED point light sources α and the LED point light sources β are also arranged to be alternately above and below in the longitudinal direction (up-and-down direction).

In Figures 14 and Figure 15, the light-emitting unit 55 formed by using the LED point light sources having two types of dominant wavelengths has been described. However, the types of the dominant wavelengths that constitute the light-emitting unit are not limited to the two types. It is possible to combine the LED point light sources having three or more types of dominant wavelengths.

### «Arrangement of Light-Emitting Units»

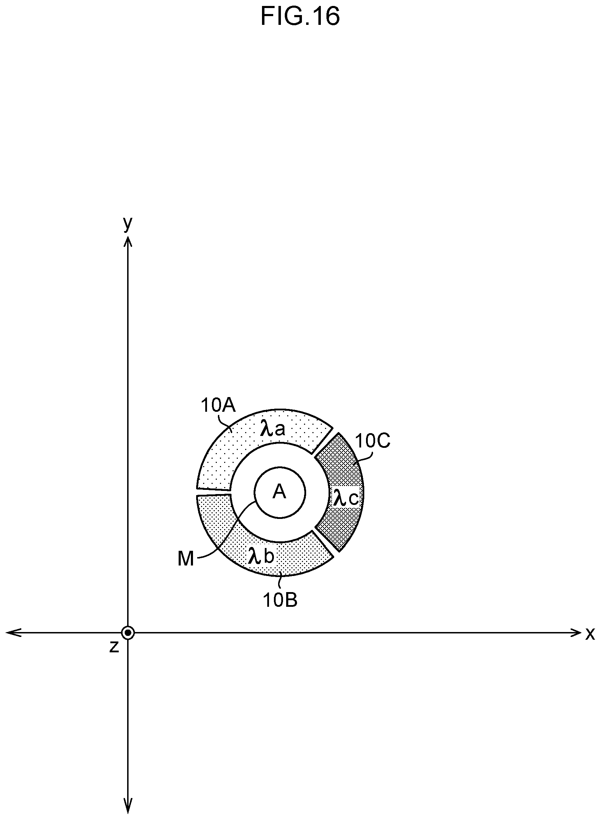

The light-emitting units may be arranged in various forms in view of illuminating the medicine M in all directions. Figure 16 is a view showing another example of the arrangement of the light-emitting units.

In the case shown in Figure 16, the first light-emitting unit 10A for the light of a wavelength band λa, the second light-emitting unit 10B for the light of a wavelength band λb, and the third light-emitting unit 10C for the light of a wavelength band λc are arranged so as to form a circular hole shape. By arranging the light-emitting units in this way, it becomes possible to illuminate the engraved mark A of the medicine M from all the directions, so that more efficient emphasis processing can be performed.

### <Fourth light-emitting unit>

In the examples described above, the illuminating unit 10 including the light-emitting units having three wavelength bands has been described. However, the present invention is not limited to these examples. For example, an additional light-emitting unit may be provided for the three wavelength bands constituting the three primary colors.

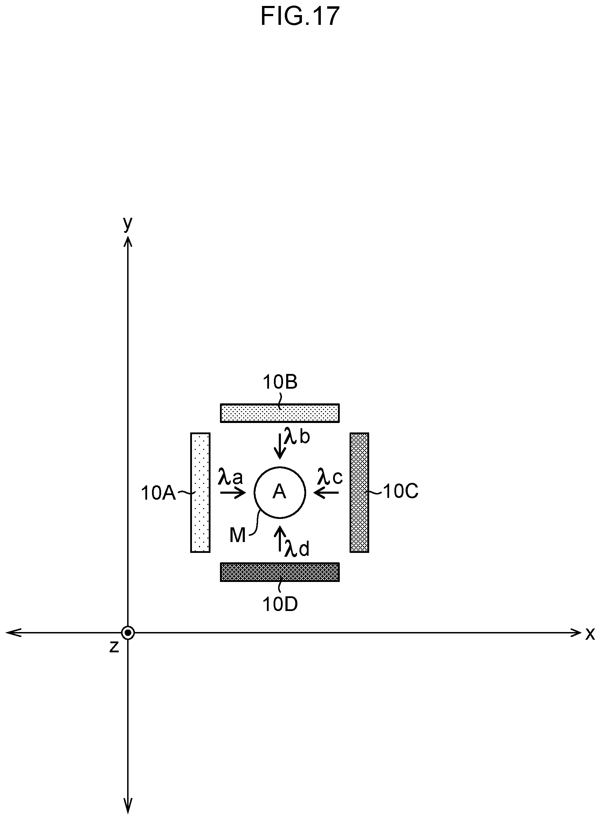

Figure 17 is a view schematically showing the arrangement of the light-emitting units. In the case shown in Figure 17, the illuminating unit 10 includes the first light-emitting unit 10A, the second light-emitting unit 10B, the third light-emitting unit 10C, and a fourth light-emitting unit 10D. The first light-emitting unit 10A emits light having a wavelength band λa, the second light-emitting unit 10B emits light having a wavelength band λb, and the third light-emitting unit 10C emits light having a wavelength band λc. The wavelength band λa, the wavelength band λb, and the wavelength band λc constitute the three primary colors as described in Figure 2. The fourth light-emitting unit 10D emits light having a wavelength band λd. The wavelength band λd is a wavelength band of white light constituted of, for example, the wavelength bands λa + λb + λc. In this case, for example, the first light-emitting unit 10A, the second light-emitting unit 10B, and the third light-emitting unit 10C may simultaneously emit light, and the fourth light-emitting unit 10D may emit light separately.

In another example, the wavelength band λd has a yellow (Y) wavelength band. Furthermore, in this case, the first light-emitting unit 10A, the second light-emitting unit 10B, the third light-emitting unit 10C, and the fourth light-emitting unit 10D emit light simultaneously.

As shown in Figure 17, the irradiation directions of the first light-emitting unit 10A and the second light-emitting unit 10B perpendicularly intersect, whereas the irradiation directions of the first light-emitting unit 10A and the fourth light-emitting unit 10D perpendicularly intersect. The irradiation directions of the third light-emitting unit 10C and the second light-emitting unit 10B perpendicularly intersect, whereas the irradiation directions of the third light-emitting unit 10C and the fourth light-emitting unit 10D perpendicularly intersect. Because the first light-emitting unit 10A, the second light-emitting unit 10B, the third light-emitting unit 10C, and the fourth light-emitting unit 10D are arranged in this way, it becomes possible to illuminate the medicine M from four directions so that emphasis processing can be performed depending on the medicines having an engraved mark or a print in various forms.

Although examples of the present invention have been described in the foregoing, it is naturally understood the present invention is not limited to the embodiments disclosed and various modifications are possible without departing from the spirit of the present invention.

### Explanation of Reference Signs

- 1: Medicine identification device
- 2: Image generation device
- 10: Illuminating unit
- 10A: First light-emitting unit
- 10B: Second light-emitting unit
- 10C: Third light-emitting unit
- 12: Imaging unit
- 14: Imaging control unit
- 16: Image generating unit
- 18: Processing control unit
- 20: Medicine identifying unit
- 21: CPU
- 22: Display unit
- 24: Operating unit
- 28: Storage
- 26: Medicine database (medicine DB)
- 32: Edge Image synthesizing unit
- 34: Edge Image generating unit
- M: Medicine
- P1: First Image
- P2: First Image
- P3: First Image
- Q: Second image

## Claims

1. An image generation device, comprising:
a stage configured to place thereon a medicine whose surface has an engraved mark or a print;
an illuminating unit including a plurality of light-emitting units that respectively emit light of a plurality of wavelength bands that are different from each other, the light-emitting units simultaneously illuminating the surface of the medicine from irradiation directions different from each other;
an imaging unit including an imaging element provided with an array of filters having spectral sensitivity characteristics corresponding to the wavelength bands that the respective light-emitting units have, the imaging unit configured to acquire a plurality of first images of the medicine corresponding to the respective wavelength bands from the imaging element;
an image generating unit configured to generate, based on the plurality of first images acquired by the imaging unit, a second image to which emphasis processing for emphasizing the engraved mark or the print on the surface of the medicine has been applied; and
a processing control unit configured to control the image generating unit to generate the second image in a case where two or more of output values of the respective first images are equal to or more than a threshold, and control the image generating unit not to generate the second image in a case where less than two of the output values of the respective first images are equal to or more than the threshold.

2. The image generation device according to claim 1, wherein
the illuminating unit has three or more light-emitting units, and
the processing control unit causes the image generating unit to generate the second image in a case where three or more of the output values of the respective first images are equal to or more than the threshold, and causes the image generating unit not to generate the second image in a case where less than three of the output values of the respective first images are equal to or more than the threshold.

3. The image generation device according to claim 2, wherein the illuminating unit has three light-emitting units that emit light of three wavelength bands constituting three primary colors.

4. The image generation device according to claim 2 or 3, wherein
the illuminating unit has a first light-emitting unit, a second light-emitting unit, and a third light-emitting unit,
the irradiation directions of the first light-emitting unit and the second light-emitting unit intersect on the medicine at 120°, and the irradiation directions of the first light-emitting unit and the third light-emitting unit intersect on the medicine at 120°.

5. The image generation device according to any one of claims 2 to 4, wherein
the illuminating unit has a first light-emitting unit, a second light-emitting unit, and a third light-emitting unit, and
the first light-emitting unit, the second light-emitting unit, and the third light-emitting unit are arranged so as to form a circular hole shape.

6. The image generation device according to any one of claims 1 to 3, wherein
the illuminating unit has a first light-emitting unit, a second light-emitting unit, a third light-emitting unit, and a fourth light-emitting unit, and
the irradiation directions of the first light-emitting unit and the second light-emitting unit perpendicularly intersect on the medicine, the irradiation directions of the first light-emitting unit and the fourth light-emitting unit perpendicularly intersect on the medicine, and the irradiation directions of the second light-emitting unit and the third light-emitting unit perpendicularly intersect on the medicine.

7. The image generation device according to any one of claims 1 to 6, wherein the processing control unit uses a sum, an average or a median of pixel values in each of the first images, as the output value.

8. The image generation device according to any one of claims 1 to 7, wherein
the image generating unit acquires a plurality of edge images using edge extraction filters according to the irradiation directions, and generates the second image using the plurality of edge images.

9. A medicine identification device which identifies the medicine based on the second image generated by the image generation device according to any one of claims 1 to 8.

10. A medicine display device which displays the second image generated by the image generation device according to any one of claims 1 to 8, on a display unit.

11. An image generation method, comprising:
a step of simultaneously illuminating, by a plurality of light-emitting units configured to emit light of a plurality of wavelengths that are different from each other, a surface of a medicine from irradiation directions different from each other, the medicine being placed on a stage and having an engraved mark or a print on the surface;
a step of acquiring, from an imaging element provided with an array of filters having spectral sensitivity characteristics corresponding to the wavelength bands of the light-emitting units, a plurality of first images of the medicine corresponding to the respective wavelength bands;
a step of generating, based on the plurality of first images, a second image to which emphasis processing for emphasizing the engraved mark or the print on the surface of the medicine has been applied; and
a step of performing control to generate the second image in a case where two or more of output values of the respective first images are equal to or more than a threshold, and not to generate the second image in a case where less than two of the output values of the respective first images are equal to or more than the threshold.

12. A program causing a computer to execute an image generation process, the process including:
a step of simultaneously illuminating, by a plurality of light-emitting units configured to emit light of a plurality of wavelengths that are different from each other, a surface of a medicine from irradiation directions different from each other, the medicine being placed on a stage and having an engraved mark or a print on the surface;
a step of acquiring, from an imaging element provided with an array of filters having spectral sensitivity characteristics corresponding to the wavelength bands of the light-emitting units, a plurality of first images of the medicine corresponding to the respective wavelength bands;
a step of generating, based on the plurality of first images, a second image to which emphasis processing for emphasizing the engraved mark or the print on the surface of the medicine has been applied; and
a step of performing control to generate the second image in a case where two or more of output values of the respective first images are equal to or more than a threshold, and not to generate the second image in a case where less than two of the output values of the respective first images are equal to or more than the threshold.

13. A non-temporary, computer-readable recording medium which causes a computer to execute the program according to claim 12, when an instruction stored in the recording medium is read by the computer.
